# EUROPÄISCHE PATENTSCHRIFT

(11) **EP 1 465 739 B1**
(45) Veröffentlichungstag und Bekanntmachung des Hinweises auf die Patenterteilung: **21.03.2007**
(21) Anmeldenummer: 02806320.4
(22) Anmeldetag: 18.12.2002
(51) Int. Cl.: B05D 1/32, B05D 3/06

(54) **VERFAHREN ZUM BESCHICHTEN VON EINEM SUBSTRAT MIT LÖCHERN**
METHOD FOR COATING A SUBSTRATE HAVING HOLES
PROCEDE DE REVETEMENT D'UN SUBSTRAT POURVU DE TROUS

(30) Priorität: 15.01.2002 EP 02000875
(43) Veröffentlichungstag der Anmeldung: 13.10.2004
(73) Patentinhaber: SIEMENS AKTIENGESELLSCHAFT, 80333 München (DE)
(72) Erfinder: JEUTTER, Andre, 71120 Grafenau (DE); STAMM, Werner, 45481 Mülheim a.d. Ruhr (DE)
(86) Internationale Anmeldenummer: PCT/EP2002/014500
(87) Internationale Veröffentlichungsnummer: WO 2003/059531

(56) Entgegenhaltungen:
- EP-A- 1 076 107
- US-A- 5 328 723
- US-B2- 6 335 078
- DATABASE WPI Section Ch, Week 199402 Derwent Publications Ltd., London, GB; Class A88, AN 1994-014562 XP002223347 -& SU 1 782 672 A (PROGRESS SCI PRODN ASSOC), 23. Dezember 1992 (1992-12-23)

## Beschreibung

Die Erfindung betrifft ein Verfahren zur Beschichtung von einem Substrat mit Löchern.

Filmgekühlte Substrate in Form von Turbinenschaufeln weisen Löcher, beispielsweise für die Durchleitung des Kühlmittels, auf, wobei auf das metallische Substrat der Turbinenschaufeln noch weitere Schichten, wie z.B. sogenannte MCrAlY-Schichten oder Wärmedämmschichten aufgebracht werden. Dabei dürfen die Filmkühlbohrungen im Substrat in der Geometrie nicht beeinträchtigt werden, weil es sonst während des Betriebes zu einer Erhöhung der Oberflächentemperatur der Turbinenschaufel kommt, was zu einer Reduzierung der Lebensdauer der Turbinenschaufel führt.

Zur Beschichtung des metallischen Substrats im Rahmen der Herstellung einer Turbinenschaufel werden beispielsweise elektro-chemische Verfahren verwendet, bei denen die Schichten bei niedrigen Temperaturen (z.B. 50°C) auf das Substrat aufgebracht werden. Bei einer Schicht, die nach einem solchen Verfahren aufgebracht wird, kommt es jedoch im oberflächennahen Bereich zum Ausbrechen von Partikeln und zu Konzentrationsinhomogenitäten der Schicht, was die Funktion der Schicht beeinträchtigt. Dies hat bei einer MCrAlY-Schicht eine Verschlechterung der Oxidationsbeständigkeit und bei Aufbringung einer Wärmedämmschicht eine Verschlechterung der Haftung der Wärmedämmschicht zur Folge.

Aufgabe der Erfindung ist es, dementsprechend ein Verfahren anzugeben, bei dem ein Loch, insbesondere ein Filmkühlloch, eines Substrats bei einer Aufbringung einer Schicht auf das Substrat und der nachfolgenden Behandlungen in seiner Geometrie erhalten bleibt und ein verbesserter Zusammenhalt der Schicht gewährleistet ist.

Die Aufgabe wird durch das Verfahren gemäss Anspruch 1 gelöst.

Das erfindungsgemässe Verfahren zur Beschichtung von einem Substrat, vorzugsweise einer Turbinenschaufel, mit Löchern sieht vor, dass in einem ersten Schritt die Löcher mit einem Material oder Stopfen so gefüllt werden, dass sie nach außen abgedeckt und so im folgenden vor Veränderungen ihrer Geometrie geschützt werden. In einem weiteren Schritt findet eine vorteilhafte elektro-chemische oder Niedertemperaturaufbringung zumindest einer Schicht statt. Während der Beschichtung schützt der Stopfen das Loch vor Materialbefüllung, da er bei den Temperaturen des Beschichtungsvorgangs formstabil ist.
Zumindest eine Schicht benötigt eine Bestrahlung der Oberfläche, bei der eine vorteilhafte Teilaufschmelzung der Oberfläche der Schicht erfolgt. Durch die Bestrahlung der Oberfläche werden die oberflächennahen Partikel der Beschichtung mit dem Substrat unter Homogenisierung der Elementverteilung verbunden, so dass auch unter extremen Einsatzbedingungen die Funktion der Schicht als Oxidationsschutz bzw. Haftvermittlerschicht erhalten bleibt. Gleichzeitig wird eine Veränderung der Lochstruktur durch das nur an der Oberfläche wirksame Verfahren verhindert.

Vorteilhafte Weiterbildungen des Verfahrens gemäss Anspruch 1 sind in den Unteransprüchen aufgelistet.

Der Stopfen ist bei einer Temperatur, die höher ist als beim Niedertemperaturaufbringungsverfahren, beispielsweise weich und lässt sich gut in das Loch einbringen. Beim Niedertemperaturaufbringungsverfahren lässt sich der Stopfen gut durch Erwärmung entfernen. Vorzugsweise ist der Stopfen aus Wachs. Der Stopfen kann auch aus Graphit sein, der sich an Luft durch Oxidieren leicht entfernen lässt.

Ein besonderer Vorteil des erfindungsgemässen Verfahrens besteht darin, dass bei der Oberflächenbehandlung das abdampfbare Material aus dem Loch abgedampft, d. h. entfernt werden kann.

Als Ausführungsbeispiel sind in der Figur 1a bis 1d einzelne Schritte des erfindungsgemässen Verfahrens schematisch dargestellt.

Figur 1a zeigt ein Substrat 1, das bspw. einen Teilausschnitt einer Turbinenschaufel, insbesondere Gasturbinenschaufel, darstellt.
Das Substrat 1 weist zumindest ein Loch 4 auf. Das zumindest eine Loch 4 kann ein Durchgangsloch 7 oder ein Sackloch 10 sein. Das Durchgangsloch 7 wird beispielsweise als Filmkühlloch verwendet, wobei im Betrieb der Turbinenschaufel 1 bspw. Luft von innen nach aussen durch das Filmkühlloch 7 strömt und das Substrat 1 an der Oberfläche vor heissen Gasen schützt.
Das Substrat 1 weist eine Oberfläche 3 auf.

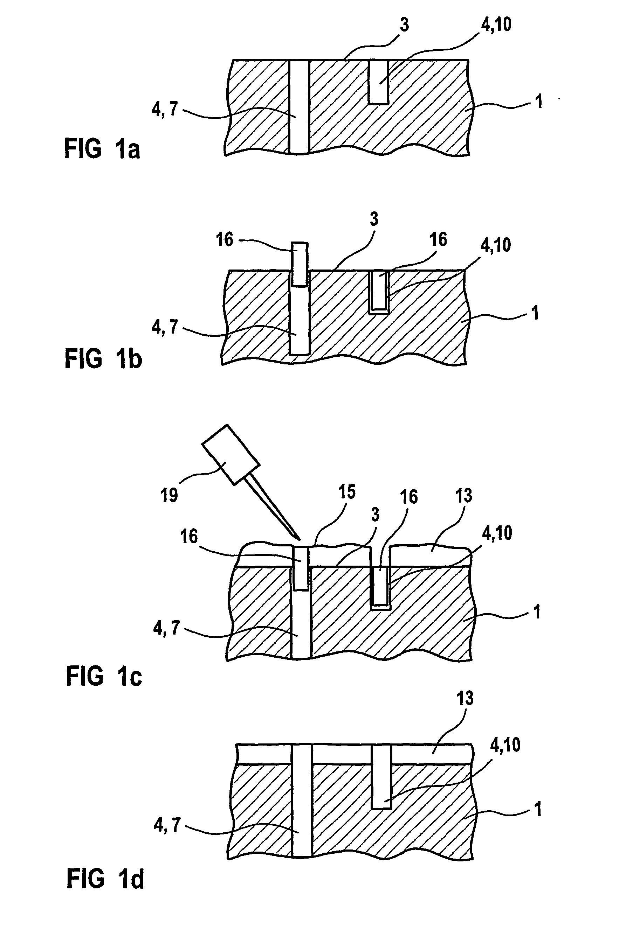

Im oberflächennahen Bereich wird in einem ersten Schritt des erfindungsgemässen Verfahrens ein Stopfen 16 in das Loch 4 eingeführt (Fig. 1b). Der Stopfen 16 kann bündig mit dem Loch abschließen oder auch über die Oberfläche 3 hinausragen.
Das Substrat 1 aus Metall oder Keramik kann auch schon eine Beschichtung aufweisen, auf die eine weitere Schicht 13 (Fig. 1c) aufgebracht wird.

Als Material für den Stopfen 16 können Wachs, Loctite-Kleber oder andere Materialien verwendet werden, die bei der Beschichtungstemperatur der Schicht 13 in ihrer Form hitzebeständig sind, sich vorzugsweise aber bei einer höheren Temperatur bspw. abdampfen lassen.

Das Wachs wird bspw. In fester Form in das Loch 4 hineingedrückt oder erwärmt, dass es in das Loch 4 hinein fliesst und sich ein Stopfen 16 bildet.

In einem weiteren Schritt (Fig. 1c) wird auf die Oberfläche 3 des Substrats 1 selbst oder einer bereits auf dem Substrat 1 vorhandenen Schicht die zumindest eine bspw. metallische Schicht 13 aufgebracht. Dies kann z. B. eine sogenannte MCrALY-Schicht sein, wobei "M" für ein Element Eisen, Kobalt oder Nickel steht. Eine solche Schicht dient zum Oxidationsschutz des Substrats 1.
Diese Schicht 13 ist mittels eines Beschichtungsverfahrens bei niedrigen Temperaturen beispielsweise einer elektrochemischen Aufbringung auf das Substrat 1 aufgebracht worden. Elektrochemische Beschichtungsverfahren finden beispielsweise bei einer Temperatur unterhalb 250°C, insbesondere unter 100°C, vorzugsweise bei etwa 50°C statt.
Es kann auch eine Keramik auf die Oberfläche 3 des Substrats 1 aufgebracht werden, bspw. eine Wärmedämmschicht.
Aufgrund der niedrigen Temperaturen kommt es zu keinen oder kaum zu Spannungen zwischen Schicht und Substrat, da eventuell verschiedene Ausdehnungskoeffizienten oder unterschiedliche Temperaturen von Substrat und Schicht bei einer Abkühlung keine oder nur geringe Spannungen erzeugen können.

Wenn der Stopfen 16 über die Oberfläche 3 des Substrats hinausragt, so findet auf dem herausragenden Teil kein Materialauftrag statt. Auch wenn der Stopfen 16 nicht aus der Oberfläche 3 hinausragt, sondern einen ebenen Abschluss mit der Oberfläche 3 bildet, findet ebensowenig ein Materialauftrag im Bereich des Stopfens 16 statt, weil eine Haftung des Materials der Schicht 13 auf dem Stopfen 16 bspw. kaum oder nicht möglich ist.

Die Schicht 13 benötigt eine Nachbehandlung durch Bestrahlung der Oberfläche 15 (Fig. 1c), bei dem eine bessere Haftung von Partikeln der Schicht 13 und eine Homogenisierung im oberflächennahen Bereich erfolgt. Dabei wird die Schicht 13 an und/oder unter der Oberfläche 15 bspw. aufgeschmolzen. Dies kann durch eine Laserbehandlung oder durch bspw. gepulste Elektronenbestrahlung erfolgen.
So wird eine gleichmässige Verteilung der Elemente von aufgebrachten CrAlY-Partikeln erreicht.
Weitere Methoden sind hier denkbar.

Bei der Bestrahlung der Oberfläche mittels eines Oberflächenbehandlungsgeräts 19 kann die Temperatur beispielsweise so gewählt sein, dass der Stopfen 16 abdampft. Es kann jedoch auch vorgesehen sein, dass in einem zusätzlichen Wärmebehandlungsschritt der Stopfen 16 abgedampft wird oder einfach mechanisch entfernt wird.

Figur 1d zeigt ein Substrat 1 mit einer Schicht 13, bei dem die Geometrie des Lochs 4 auch nach der Beschichtung erhalten ist.
Wenn die Schicht 13 eine MCrAlY Schicht ist, kann auch noch eine keramische Wärmedämmschicht in derselben Art und Weise aufgebracht werden.

Das Verfahren findet auch Anwendung beim Refurbishment, d.h. beim Wiederbeschichten eines bereits verwendeten Substrats.

## Patentansprüche

1. Verfahren zur Beschichtung eines Substrats (1),
das zumindest ein Loch (4) aufweist,
bei dem in einem ersten Schritt das zumindest eine Loch (4) mit einem Stopfen (16) abgedeckt wird,
in einem weiteren Schritt zumindest eine Schicht (13) auf eine Oberfläche (3) des Substrats (1) aufgebracht wird,
wobei es sich bei den Aufbringungsverfahren für die Schicht (13) um ein Beschichtungsverfahren bei niedrigen Temperaturen handelt,
die unter 250°C, insbesondere unter 100°C, liegen,
und in einem weiteren Schritt eine Bestrahlung einer Oberfläche (15) der zumindest einen Schicht (13) stattfindet,
so dass eine bessere Haftung und Homogenisierung von Partikeln im oberflächennahen Bereich der Schicht (13) gegeben ist.

2. Verfahren nach Anspruch 1,
**dadurch gekennzeichnet, dass**
das Substrat (1) eine Turbinenschaufel ist.

3. Verfahren nach Anspruch 1,
**dadurch gekennzeichnet, dass**
bei der Bestrahlung ein Bereich unterhalb der Oberfläche (15) der Schicht (13) zumindest teilweise aufgeschmolzen wird.

4. Verfahren nach Anspruch 1,
**dadurch gekennzeichnet, dass**
als Beschichtungsverfahren bei niedrigen Temperaturen ein elektrochemisches Verfahren zur Aufbringung von Schichten verwendet wird.

5. Verfahren nach Anspruch 1,
**dadurch gekennzeichnet, dass**
die Bestrahlung der Oberfläche (15) mittels gepulster Elektronenbestrahlung durchgeführt wird.

6. Verfahren nach Anspruch 1,
**dadurch gekennzeichnet, dass**
die Bestrahlung der Oberfläche (15) mittels einer Laserbehandlung durchgeführt wird.

7. Verfahren nach Anspruch 1,
**dadurch gekennzeichnet, dass** während oder am Ende der Bestrahlung der Oberfläche (15) der Stopfen (16) aus dem oberflächennahen Bereich des Lochs (4) entfernt wird.

8. Verfahren nach Anspruch 7,
**dadurch gekennzeichnet, dass**
der Stopfen (16) mittels Abdampfen entfernt wird.

9. Verfahren nach Anspruch 1,
**dadurch gekennzeichnet, dass**
die Schicht (13) eine Keramik, insbesondere eine keramische Wärmedämmschicht, oder ein Metall, insbesondere eine MCrAlY-Schicht (M= Fe, Co, Ni), ist.

10. Verfahren nach Anspruch 1,
**dadurch gekennzeichnet, dass** das zumindest eine Loch (4) ein Filmkühlloch oder ein Prallkühlloch ist.

11. Verfahren nach Anspruch 1,
**dadurch gekennzeichnet, dass** der Stopfen (16) wachsartig ist.

## Claims

1. Method for coating a substrate (1) that contains at least one hole (4),
in which in a first step the at least one hole (4) is covered by a plug (16),
in a further step at least one coating (13) is applied to a surface (3) of the substrate (1),
wherein the application process for the coating (13) is a coating process at low temperatures,
which lie below 250°C, in particular below 100°C,
and in a further step irradiation of a surface (15) of the at least one coating (13) takes place, '
so that improved adhesion and homogenization of particles is provided in the region of the coating (13) close to the surface.

2. Method according to Claim 1,
**characterized in that** the substrate (1) is a turbine blade.

3. Method according to Claim 1,
**characterized in that**
during the irradiation, a region below the surface (15) of the coating (13) is melted at least partially.

4. Method according to Claim 1,
**characterized in that** an electrochemical process for applying coatings is used as the coating method at low temperatures.

5. Method according to Claim 1,
**characterized in that** the irradiation of the surface (15) is effected by pulsed electron irradiation.

6. Method according to Claim 1,
**characterized in that** the irradiation of the surface (15) is effected by a laser treatment.

7. Method according to Claim 1,
**characterized in that** during, or at the end of, the irradiation of the surface (15), the plug (16) is removed from the region of the hole (4) close to the surface.

8. Method according to Claim 7,
**characterized in that** the plug (16) is removed by vaporization.

9. Method according to Claim 1,
**characterized in that** the coating (13) is a ceramic, in particular a ceramic thermal insulation coating, or a metal, in particular an MCrAlY coating (M = Fe, Co, Ni).

10. Method according to Claim 1,
**characterized in that** the at least one hole (4) is a film-cooling hole or an impingement-cooling hole.

11. Method according to Claim 1,
**characterized in that** the plug (16) is wax-like in nature.

## Revendications

1. Procédé de revêtement d'un substrat (1),
qui a au moins un trou (4),
dans lequel, dans un premier stade, on recouvre au moins un trou (4) d'un tampon (16),
dans un autre stade, on dépose au moins une couche (13) sur la surface (3) du substrat (1),
dans lequel le procédé de dépôt de la couche (13) est un procédé de dépôt à des températures basses,
qui sont inférieures à 250°C, notamment inférieures à 100°C,
et, dans un autre stade, a lieu une exposition à un rayonnement d'une surface (15) de la au moins une couche (13),
de manière à obtenir une adhérence et une homogénéisation meilleures de particules dans la partie de la couche (13) qui est proche de la surface.

2. Procédé suivant la revendication 1,
**caractérisé en ce que** le substrat (1) est une aube de turbine.

3. Procédé suivant la revendication 1,
**caractérisé en ce que**, lors de l'exposition à un rayonnement, on fond au moins en partie une partie en dessous de la surface (15) de la couche (13).

4. Procédé suivant la revendication 1,
**caractérisé en ce que** l'on utilise comme procédé de revêtement à des températures basses un procédé électrochimique pour le dépôt de couches.

5. Procédé suivant la revendication 1,
**caractérisé en ce que** l'on effectue l'exposition de la couche (15) au moyen d'un faisceau d'électrons pulsé.

6. Procédé suivant la revendication 1,
**caractérisé en ce que** l'on effectue l'exposition de la surface (15) au moyen d'un traitement au laser.

7. Procédé suivant la revendication 1,
**caractérisé en ce que**, pendant ou à la fin de l'exposition de la surface (15), on enlève le tampon (16) par le partie proche de la surface du trou (4).

8. Procédé suivant la revendication 7,
**caractérisé en ce que** l'on enlève le tampon (6) au moyen d'une évaporation.

9. Procédé suivant la revendication 1,
**caractérisé en ce que** la couche (13) est une céramique, notamment une couche calorifuge en céramique ou un métal, notamment une couche en MCrAlY (M = Fe, Co, Ni).

10. Procédé suivant la revendication 1,
**caractérisé en ce qu'**au moins un trou (4) est un trou de refroidissement pelliculaire ou un trou de refroidissement par rebondissement.

11. Procédé suivant la revendication 1,
**caractérisé en ce que** le tampon (16) est cireux.
